# EUROPÄISCHE PATENTANMELDUNG

(11) **EP 2 322 905 A1**
(43) Veröffentlichungstag der Anmeldung: **18.05.2011**
(21) Anmeldenummer: 10014177.9
(22) Anmeldetag: 01.11.2010
(51) Int. Cl.: G01L 1/22, G01L 3/14, G01L 5/16, B29C 45/17

(54) **Kraftmesszelle zur Messung der Einspritzkraft beim Spritzgiessen**

(30) Priorität: 16.11.2009 DE 102009053043
(71) Anmelder: Baumer Innotec AG, 8500 Frauenfeld (CH)
(72) Erfinder: Schätzle, Daniel, 78224 Singen (DE); Simon, Jörg, 78267 Ach (DE); Husistein, Roger, 9245 Oberbüren (CH); Tarraf, Amer, 8280 Kreuzlingen (CH)
(74) Vertreter: Schmidt, Oliver

(57) **Zusammenfassung**

Die Erfindung betrifft eine Kraftmessvorrichtung (20) zur Messung axialer Kräfte, insbesondere für die Messung von Einspritzdrücken bei Spritzgussmaschinen, die einen Messkörper (21) sowie ein Sensorsystem umfasst. Das Sensorsystem beinhaltet ein Verformungselementepaar, das mit einer Elektronik (26) verbunden ist. Ein jeweiliges Verformungselement (30a, 30b) hat zwei Halterungsabschnitte (31, 32.) und einen Biegebalken (33), der sich zwischen den Halterungsabschnitten (31, 32) erstreckt, und auf dem wenigstens einen Dehnungsmesselement (34, 35) angebracht ist. Der Messkörper besitzt einen Verformungsbereich (24), der ringförmig zwischen einem Krafteinleitungsteil (22) und einem Kraftausleitungsteil (23) ausgebildet ist sowie eine Anzahl von Aussparungen (28) zur Montage eines elektronisch aufeinander abgeglichenen Verformungselementepaares (30a, 30b).

## Beschreibung

Die vorliegende Erfindung betrifft ein Verfahren zur Montage einer Kraftmessvorrichtung, die insbesondere zur Messung der Einspritzkraft beim Spritzgießen geeignet ist, sowie eine nach dem Verfahren hergestellte Vorrichtung.

Der Einspritzdruck bzw. der Nachdruck, unter denen ein plastifizierter Kunststoff oder ein anderes Spritzgussmaterial, wie etwa flüssiges Metall in eine Spritzgussform eingespritzt wird, stellen wesentliche Kenngrößen beim Spritzgießen dar und können z.B. bei vollelektrischen Spritzgussmaschinen über die Düsenanpresskraft gemessen werden. Die Messung dieser Kräfte erfolgt in der Regel mit einer Kraftmesszelle, die in der Spritzeinheit einer Maschine an einer rotierenden Schneckenwelle derart rotationssymmetrisch zur Drehachse der Welle angeordnet ist, dass eine durch eine axiale Vorschubbewegung der Schneckenwelle aufgebrachte Kraft, durch die der Einspritzdruck bzw. der Nachdruck aufgebaut wird, direkt gemessen werden kann.

Derartige gattungsbildende Kraftmesszellen umfassen in der Regel einen rotationssymmetrisch ausgebildeten Körper mit einem Krafteinleitungsteil, einem Kraftausleitungsteil sowie einem dazwischen liegenden Verformungsbereich. Dieser Verformungsbereich wird in Form eines Einstichs in die Körperoberfläche gedreht und erhält eine plane Oberfläche, auf der Dehnungsmessstreifen (DMS) paarweise, bezüglich der Symmetrieachse gegenüberliegend, präzise aufgeklebt werden. Eine Kraftmesszelle umfasst des Weitern eine elektronische Schaltung mit einem Brückenverstärker mit wenigstens zwei Eingangskanälen, mit denen die Signale aus wenigstes einem Paar DMS addiert und verstärkt ausgegeben werden, wobei eine Unpaarigkeit in den Messwerten eines Paares DMS nach der Montage der Kraftmesszelle mit der Schaltung abgeglichen wird.

Die Baugröße und der Messbereich einer Kraftmesszelle richten sich an einer jeweiligen kundenspezifischen Anwendung und werden in dem vorliegenden Beispiel einer Einspritzkraftmessung beim Spritzgießen im Wesentlichen durch die Baugröße einer Spritzeinheit bestimmt. Kraftmesszellen für die Einspritzkraftmessung werden in verschiedensten Baugrößen zur Messung der jeweiligen Nennkräfte hergestellt und oft kunden- bzw. anwenderseitig in einer entsprechenden Maschine installiert und in Betrieb genommen werden. Gegebenenfalls können individuell gefertigt Kraftmesszellen, die auf Spezifikationen der Kunden ausgelegte sind, erforderlich werden. Der jeweilige Messbereich wird durch die Geometrie, insbesondere durch die des Verformungsbereichs bestimmt, während die DMS und die zugehörige Elektronik bei allen Typen im Wesentlichen identisch aufgebaut sind.

Nachteilig an dem Fertigungsverfahren gemäß dem Stand der Technik, nach dem zunächst der typischerweise metallische Körper der Spritzgussvorrichtung spanend strukturiert wird und anschließend die DMS auf den Verformungsbereich präzise aufgeklebt und mit der Elektronik verdrahtet werden, ist der hohe Fertigungs- und Transportaufwand einer solchen kompletten Messvorrichtung.

Dieses ist insbesondere bei der Ersatzteilversorgung problematisch, da oftmals nur ein oder mehrere DMS und/oder die Elektronik defekt sind, diese aber in einer ansonsten mechanisch intakten Kraftmesszelle kundenseitig nicht ausgetaucht werden können, da ein präzises Kleben der DMS und ein anschließender elektronische Abgleich nur herstellerseitig erfolgen kann.

Der Erfindung liegt daher die Aufgabe zugrunde, eine Kraftmessvorrichtung, insbesondere für Spritzgussvorrichtungen auf Basis der DMS-Technologie bereitzustellen, die universell für verschiedene Größen von Kraftmesszellen und für verschiedene Kraftbereiche einsetzbar ist und den Fertigungs- und Transportaufwand reduziert.

Die Lösung dieser Aufgabe ist durch den Gegenstand gemäß dem unabhängigen Verfahrensanspruch und dem nebengeordneten Vorrichtungsanspruch gegeben.

Bevorzugte und/oder vorteilhafte Ausführungen und Weiterbildungen sind Gegenstand der jeweiligen abhängigen Ansprüche.

Ein erfindungsgemäßes Sensorsystem mit Dehnungsmessstreifen zur axialen und/oder radialen Kraftmessung, umfasst wenigstens ein Verformungselementepaar, wobei ein jeweiliges Verformungselement zwei Halterungsabschnitte, einen sich zwischen den Halterungsabschnitten erstreckenden Biegebalken sowie jeweils wenigstens ein auf den Biegebalken angebrachtes Dehnungsmesselementen beinhaltet.

Die Dehnungsmesselemente der Verformungselemente sind mit einer Elektronik verbunden, die auf das Verformungselementepaar abgeglichen ist.

Die Dehnungsmesselemente können vorzugsweise als Dehnungsmessstreifen (DMS) ausgebildet sein.

Die Dehnungsmesselemente können aber auch auf Verformungselementen aufgebracht sein, welche nur mit einem Halterungselement zusammen verbunden sind, Also auf ein Biegebalken mit einem losen Ende, welche die Bewegung abtastet.

Vorteilhaft an dem erfindungsgemäßen Sensorsystem ist, dass die vorgefertigten Verformungselemente mit Dehnungsmesselementen elektronisch abgeglichen sein können und zum universellen Einsatz für unterschiedliche Größen, Kraftbereiche und Geometrien von Kraftmesszellen bereitstehen.

Der Abgleich kann in der Elektronik erfolgen, die vorzugsweise wenigstens einen Brückenverstärker umfasst, der auf die Verformungselemente und die Dehnungsmesselemente abgeglichen ist.

Das Sensorsystem wird getrennt von dem Messkörper einer Kraftmesszelle gefertigt und kann anwenderseitig ohne einen weiteren Abgleich auf einem spezifischen Messkörper montiert werden. Insbesondere bei der Ersatzteilversorgung ergibt sich im Vergleich zum Stand der Technik der Vorteil, dass anwenderseitig nur ein defektes Sensorsystem, nicht aber eine gesamte, abgeglichene Messzelle ausgetaucht werden muss. Somit werden Transport- und Montagekosten erheblich reduziert. Die Verformungselemente und die Kraftmesszelle sind dazu voneinander lösbar ausgestaltet. Geeignet sind insbesondere Verschraubungen an den Halterungsabschnitten der Verformungselemente mit dem Messkörper. Ebenfalls denkbar ist beispielsweise aber auch eine verriegelbare Einspanneinrichtung. Möglich ist auch, ein Ende des Verformungselements in eine entsprechend geformte Aufnahme einzusetzen und das andere Ende mittels einer Verschraubung zu fixieren.

In einer bevorzugten Weiterbildung sieht ein Thermoelement vor, dass auf dem Biegebalken wenigstens eines der Verformungselemente angebracht und mit der Elektronik verbunden ist. Mit einer analogen und/oder digitalen Schaltung innerhalb der Elektronik des Sensorsystems ist somit eine temperaturkompensierte ideale Kraftmessung möglich.

Die vorliegende Erfindung Stellt somit ein Sensorsystem bereit, dass für universelle Geometrien von Messkörpern und damit auch für universelle Kraftmesszellengeometrien einsetzbar ist.

Des weiteren kann die Elektronik des Sensorsystems eine Recheneinrichtung umfassen, welche einen Datensatz gespeichert hält, der zum Vergleich mit aktuellen Messwerten zur Erstellung von Prognosen verwendet wird. Der Datensatz kann beispielsweise ein Dehnungs- und/oder Verformungsmodell beinhalteten und/oder aus früher gemessenen Messwerten erstellt worden sein. Die Recheneinrichtung ist dazu eingerichtet, aktuelle Kraftmessungen des Sensorsystems mit den Werten des Datensatzes zu vergleichen. Anhand des Vergleichs kann beispielsweise eine Prognose über eine Materialermüdung bzw. eine Degradation des Sensorsystems erstellt werden.

Ein Vergleich zwischen dem Datensatz und gemessenen Werten kann in vorgegebenen Zeitintervallen oder ereignisgetriggert erfolgen.

Alternativ oder zusätzlich kann in der Recheneinrichtung ein Algorithmus implementiert sein, welcher unter Verwendung eines Bestfit-Algorithmus, welcher auf gespeicherte Messwerte angewendet wird, ein Modell des Zusammenhangs der physikalischen Größen, beziehungsweise der zugehörigen Messgrößen, beispielsweise in Form eines aus den Bestfit-Daten erstellten Zusammenhangs der zeitlichen Änderung der gemessenen physikalischen Größen erstellt, und anhand diese Modells eine Prognose erstellt. Dies kann gemäß einer Weiterbildung der Erfindung durch Vergleich mit einem gespeicherten Modell erfolgen..

Gemäß noch einer Weiterbildung der Erfindung ist eine Auswahleinrichtung vorgesehen. Diese Auswahleinrichtung entscheidet anhand vorbestimmter Kriterien, ob eine Prognose anhand eines Vergleichs aktueller Messwerte mit dem gespeicherten Datensatz oder anhand eines durch den Bestfit-Algorithmus erstellten Modells erstellt wird.

Gemäß noch einer Weiterbildung der Erfindung ist die Recheneinrichtung dazu eingerichtet, eine Aktion abhängig vom Vergleich der Messwerte mit dem vorgespeicherten Datensatz und/oder der Erstellung eines Bestfit-Modells durchzuführen. Eine solche Aktion kann zeitlich, etwa in vorgegebenen Zeitintervallen oder ereignisgesteuert sein. Eine Auslösung der Aktion durch ein Ereignis ist beispielsweise eine Auslösung durch eine aufgrund einer Prognose erkannten, bereits vorhandenen oder zu erwartenden Materialermüdung. Hier kann die Aktion beispielsweise im Auslösen eines Warnsignals oder im Versenden von Kommunikationsdaten liegen. Eine weitere mögliche Aktion ist eine Selbstkalibrierung, die beispielsweise zeitlich gesteuert in vorbestimmten Zeitintervallen durchgeführt wird.

Ebenfalls ist ein Messkörper für eine axiale Kraftmessung mit einem entsprechenden Sensorsystem von der vorliegenden Erfindung erfasst. Der Messkörper ist im Wesentlichen rotationssymmetrisch aufgebaut und besitzt einen Verformungsbereich, der ringförmig zwischen einem Krafteinleitungsteil und einem Kraftausleitungsteil ausgebildet ist. In dem Krafteinleitungsteil und in dem Kraftausleitungsteil sind Aussparungen vorgesehen, die derart zueinander auf einer geraden Verbindungslinie angeordnet sind, dass die Verformungselemente eines Verformungselementepaares symmetrisch zueinander und bündig auf der Oberfläche des Verformungsbereichs montierbar sind.

Der erfindungsgemäße Messkörper eignet sich somit in besonders vorteilhafter Weise zur passgenauen Aufnahme des Sensorsystems. Somit kann ein jeweiliges Verformungselementepaar eines Sensorsystems vom Anwender symmetrisch zueinander und bündig auf der Oberfläche des Verformungsbereichs des Messkörpers angebracht werden, ohne ein weiteren aufwendigen elektronischen Abgleich durchzuführen.

Diese und weitere Merkmale sowie weitere damit einhergehende Vorteile der Erfindung ergeben sich aus der nachfolgenden näheren Beschreibung bevorzugter Ausführungsbeispiele unter Bezugnahme auf die beigefügte Zeichnungen. In den Zeichnungen zeigen:
- Fig. 1:: die Ausführung einer herkömmlichen Kraftmesszelle gemäß Stand der Technik.
- Fig. 2:: zeigt eine erfindungsgemäße Kraftmesszelle 20, die im Wesentlichen zweiteilig, aus einem Sensorsystem einerseits und einem Messkörper 21 andererseits aufgebaut ist.
- Fig. 3:: ein erfindungsgemäßes Verformungselement mit Dehnungsmessstreifen und Thermoelement.

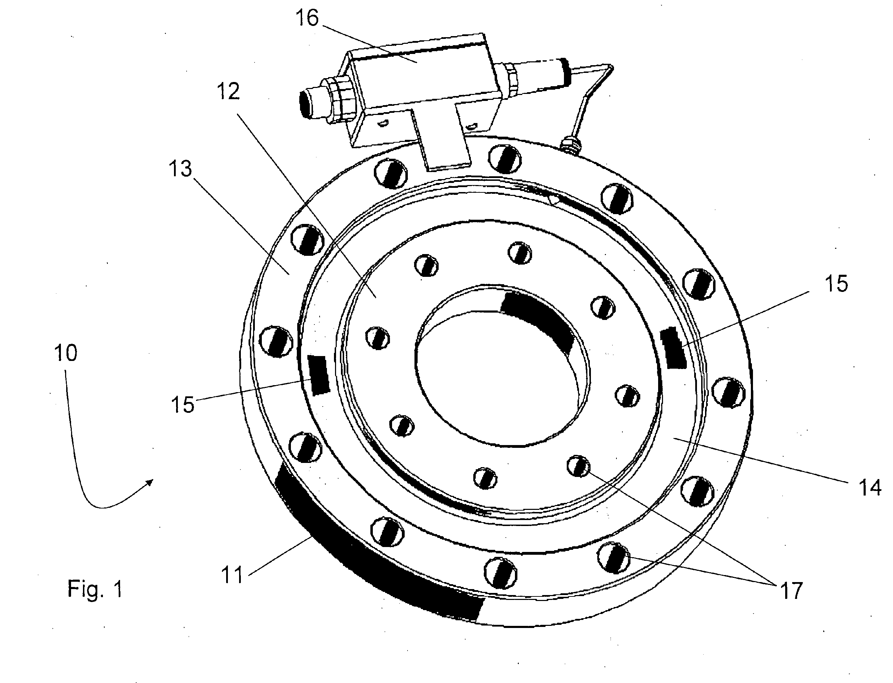

Die Figur 1 zeigt eine nach dem Stand der Technik bekannte, herkömmliche Kraftmesszelle zur Messung axial einwirkender Kräfte, die beispielsweise zur Einspritzdruckmessung an der Schneckenwelle einer Spritzgussmaschine eingesetzt werden kann.

Eine solche Kraftmesszelle 10 herkömmlicher Bauart umfasst einen im Wesentlichen rotationssymmetrischen Körper 11, der beispielsweise aus Chrommolybdänstahl besteht und einen Krafteinleitungsteil 12, einen Kraftausleitungsteil 13 sowie einen Verformungsbereich 14 umfasst. Der Verformungsbereich ist in der vorliegenden Figur in Form einer Vertiefung dargestellt, die z.B. mit Hilfe einer Drehmaschine in die obere Oberfläche des Körpers 11 eingebracht worden ist. Gegebenenfalls kann auf der gegenüberliegenden Rückseite des Körpers 11 eine zweite Vertiefung vorgesehen sein, die symmetrisch zur ersten Vertiefung ausgebildet ist.

Durch die in der bzw. in den Oberflächen mittels spanender Fertigungsverfahren eingebrachten Vertiefungen bilden somit einen membranartigen Verformungsbereich aus, der beim Einleiten axialer Kräfte in den massiv Krafteinleitungs- bzw. den Kraftausleitungsbereich gestaucht und/oder gedehnt werden kann. Diese Stauchung bzw. Drehung eines solchen kann mit Dehnungsmessstreifen 15a, 15b erfasst werden, die auf der Oberfläche des Verformungsbereichs angeordnet sind.

Die Dehnungsmessstreifen 15a, 15b zur axialen Kraftmessung werden paarweise auf die Oberfläche des Verformungsbereichs 14 einer jeweiligen Kraftmesszelle vorzugsweise aufgeklebt. Ein Dehnungsmessstreifenpaar ist jeweils zueinander symmetrisch in Bezug auf die Symmetrieachse des Körpers 11 in dem Verformungsbereich 14 abgeordnet.

Die Kraftmesszelle umfasst zusätzlich eine Elektronik 16, die wenigstens eine Brückenverstärkerschaltung beinhaltet, wobei die Eingänge einer jeweiligen Brückenschaltung mit den Dehnungsmessstreifen elektrisch verbunden sind. An einem Ausgang der Elektronik 16 kann anwendungsspezifisch z.B. ein Strom- oder Spannungssignal ausgegeben werden.

Die Brückenschaltung ermöglicht einen manuellen Abgleich einer Unpaarigkeit in der elektrischen Charakteristik bzw. einer Justagetoleranz der Dehnungsmessstreifen 15a, 15b, wobei der Abgleich herstellerseitig durchgeführt wird.

Eine solche Kraftmesszelle 10 steht somit abgeglichen für den kundenseitigen Einsatz bereit. In dem Krafteinleitungsteil 12 sowie in dem Kraftausleitungsteil 13 sind Bohrungen 17 vorgesehen, mit denen die Kraftmesszelle 10 beispielsweise zwischen einer Schneckenwelle einer Spritzgussmaschine und einer zugehörigen Antriebseinheit zum axialen Verfahren der Schneckenwelle derart einbebaut wird, so dass beim Spritzgießen der Einspritzdruck über die auf die Schneckenwelle wirkende Kraft bestimmt werden kann.

Nachteilig an diesem Konzept herkömmlicher Kraftmesszellen ist, dass eine solche kundenspezifisch konfigurierte Kraftmesszelle als Einheit gefertigt zu dem jeweiligen Einsatzort geliefert wird, um eine genaue Klebemontage und den elektronischen Abgleich der Dehnungsmessstreifen seitens des Herstellers zu ermöglichen.

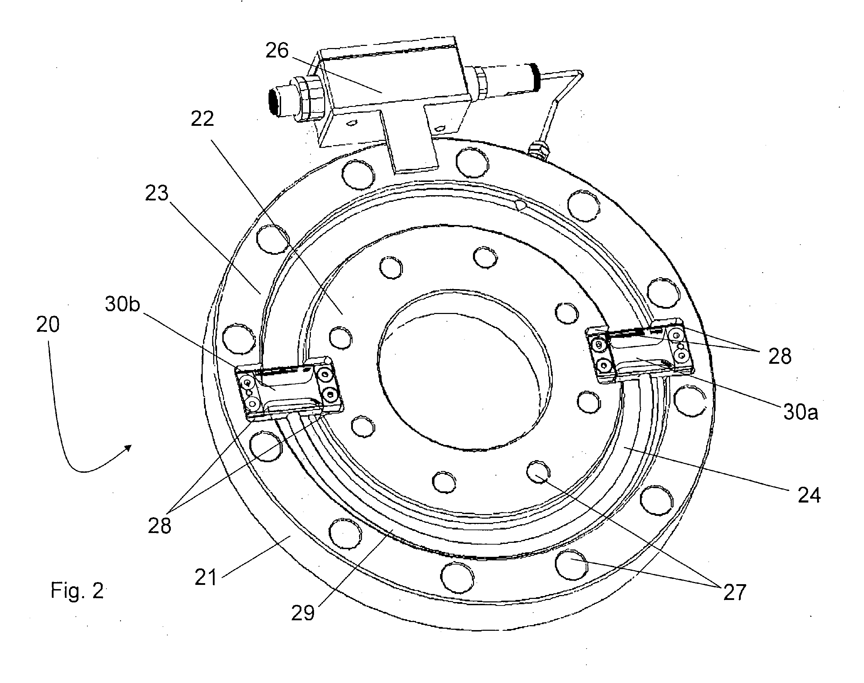

Die Figur 2 zeigt eine erfindungsgemäße Kraftmesszelle 20, die im Wesentlichen zweiteilig, aus einem Sensorsystem einerseits und einem Messkörper 21 andererseits aufgebaut ist.

Das dargestellte Sensorsystem umfasst zwei Verformungselemente 30a, 30 b, die mit einer vorkonfektionierten Verkabelung 29 zu einem Verformungselementepaar zusammengefasst und gemeinsam mit einer Elektronik 26 durch ein in der Figur nicht explizit dargestellten Kabel verbunden sind.

Der Messkörper 21 umfasst wiederum einem im Wesentlichen rotationssymmetrisch ausgebildeten Flansch mit einem Krafteinleitungsteil 22, einen Kraftausleitungsteil 23, sowie einem ringförmigen Verformungsbereich 24. Darüber hinaus sind auf dem Messkörper Aussparungen 28 für die Aufnahme von Verformungselementen 30a, 30b zur Montage eines Sensorsystems vorgesehen. Die Aussparungen 28 zur Aufnahme eines Verformungselementepaares sind jeweils auf einer geraden Verbindungslinie angeordnet, die durch die Symmetrieachse des Messkörpers 21 verläuft, so dass eine symmetrisch exakte Positionierung der Verformungselemente 30, 30a möglich ist.

Grundsätzlich besteht die Möglichkeit, zusätzlich ein zweites Paar von Verformungselementen auf dem Messkörper 21 vorzusehen, die auf einer zweiten gemeinsamen Geraden angeordnet werden, die in einem beliebigen Winkel zu der geraden Verbindungslinie angeordnet durch die Symmetrieachse des Messkörpers 21 verläuft.

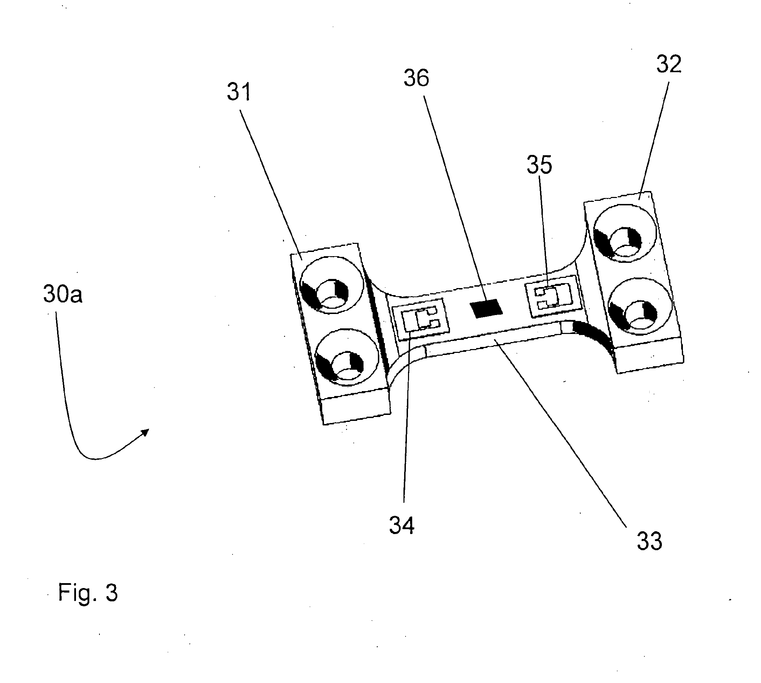

Ein Verformungselement 30a eines Verformungselementepaares für den in Fig. 2 gezeigten Messkörpers 21 ist in der Fig. 3 dargestellt. Dieses Verformungselement 30a umfasst zwei Halterungsabschnitte 31, 32 und einen Biegebalken 33, wobei auf dem sich zwischen den Halterungsabschnitten 31, 32 erstreckenden Biegebalken 33 zwei Dehnungsmesselemente 34, 35 aufgebracht sind, die z.B. als Dehnungsmessstreifen ausgeführt sind. Der Grundkörper des Verformungselements 30a mit zwei Halterungsabschnitten 31, 32 und dem Biegebalken ist einteilig, beispielsweise als Frästeil ausgebildet.

Mit den Halterungsabschnitten 31, 32 wird das Verformungselement am Messkörper 21, welcher die Gestalt eines Flansches hat, lösbar befestigt. Geeignet ist beispielsweise eine Verschraubung. Im Prinzip könnte ein solches Verformungselement 30a aber auch mit nur einem Dehnungsmesselement ausgestattet und funktionsfähig sein.

Ein zweites Verformungselement 30b eines Verformungselementepaares ist bezüglich der Definition der jeweiligen Halterungsabschnitte 31, 32 und der jeweiligen Dehnungsmesselemente 34, 35 spiegelsymmetrisch zum Verformungselement 30a aufgebaut, wobei die Spiegelsymmetrie lediglich bei der elektrischen Verschaltung im Sensorsystem berücksichtigt werden muss.

Die Dehnungsmesselemente 34, 35 der Verformungselemente werden mit den Eingängen eines Brückenverstärkers in der Elektronik 26 verschaltet, wobei eine elektrische Unpaarigkeit der Dehnungsmesselemente 34, 35 sowie eine mechanische Toleranz bei dem Aufbringen der Dehnungsmesselemente 34, 35 auf den Biegebalken 33 in dem Brückenverstärker abgeglichen wird. Der elektronische Abgleich des Sensorsystems erfolgt vor dem Einbau der Verformungselemente 30a, 30b in den Messkörper 21 einer erfindungsgemäßen Kraftmesszelle 20.

Zusätzlich zu den Dehnungsmesselementen 34, 35 kann ein Thermoelement 36 auf dem jeweiligen Biegebalken 31 eines und/oder beiden Verformungselemente eines Verformungselementepaares vorgesehen sein. Eine gemessene Temperatur wird in Form eines elektrischen Signals an die Elektronik 26 weitergeleitet, wodurch eine Temperaturkompensation bei der Kraftmessung ermöglicht wird. Die Temperaturkompensation kann mittels einer analogen und/oder einer digitalen Schaltungseinheit erfolgen.

Die zueinander elektronisch abgeglichenen Verformungselemente 30a, 30b eines Sensorsystems sind anwenderseitig in den vorgesehenen Aussparungen 28 eines gegebenenfalls bereits vorhandenen und anwendungsspezifisch dimensionierten Messkörper 21 montierbar.

Die Aussparungen 28 sind in den Krafteinleitungs- und Kraftausleitungsteilen 22, 23 des Messkörpers 21 derart an den Verformungsbereich angrenzend eingebracht, dass die Verformungselemente 30a, 30b eines Sensorsystems in einer von der Oberfläche des Verformungsbereichs aufgespannten Ebene anzuordnen und montierbar sind. Durch eine axial auf den Messkörper wirkende Kraft führt zu lokalen Spannungen in dem Verformungsbereich, die im Kraftnebenschluss von den Verformungselementen des Sensorsystems erfassbar sind.

## Patentansprüche

1. Sensorsystem mit Dehnungsmesselementen zur axialen und/oder radialen Kraftmessung, welches wenigstens ein Verformungselementepaar umfasst, wobei ein jeweiliges Verformungselement (30a, 30b) zwei Halterungsabschnitte (31, 32), einen sich zwischen den Halterungsabschnitten (31, 32) erstreckenden Biegebalken (33), sowie wenigstens einem auf den Biegebalken (33) angebrachten Dehnungsmesselement (34, 35) beinhaltet, und wobei die Dehnungsmesselemente (34, 35) der Verformungselemente mit einer Elektronik (26) verbunden sind, die auf das wenigstens eine Verformungselementepaar abgeglichen ist.

2. Sensorsystem nach vorstehendem Anspruch, **gekennzeichnet durch** Dehnungsmessstreifen als Dehnungsmesselemente.

3. Sensorsystem nach einem der vorstehenden Ansprüche **dadurch gekennzeichnet, dass** die Elektronik (26) wenigstens eine Brückenverstärker umfasst, der auf die Verformungselemente (30a, 30b) und die Dehnungsmesselemente (34, 35) abgeglichen ist.

4. Sensorsystem nach einem der vorstehenden Ansprüche **dadurch gekennzeichnet, dass** auf dem Biegebalken (33) wenigstens eines der Verformungselemente (30a, 30b) ein Thermoelement (36) angebracht ist, das mit der Elektronik (26) verbunden ist und eine temperaturkompensierte Kraftmessung ermöglicht.

5. Sensorsystem nach einem der vorstehenden Ansprüche **dadurch gekennzeichnet, dass** die Elektronik (26) des Sensorsystems eine Recheneinrichtung umfasst, welche einen Datensatz gespeichert hält, wobei die Recheneinrichtung zum Vergleich des gespeicherten Datensatzes mit aktuellen Messwerten und zur Erstellung von Prognosen anhand des Vergleichs eingerichtet ist.

6. Sensorsystem nach einem der vorstehenden Ansprüche, **gekennzeichnet durch** eine Recheneinrichtung, in welcher ein Algorithmus implementiert ist, welcher unter Verwendung eines Bestfit-Algorithmus, welcher auf gespeicherte Messwerte angewendet wird, ein Modell des Zusammenhangs der Meßgrößen erstellt.

7. Vorrichtung nach Anspruch 5 und 6, **gekennzeichnet durch** eine Auswahleinrichtung, welche dazu eingerichtet ist, anhand vorbestimmter Kriterien zu entscheiden, ob eine Prognose anhand eines Vergleichs aktueller Messwerte mit dem gespeicherten Datensatz oder anhand eines **durch** den Bestfit-Algorithmus erstellten Modells erstellt wird.

8. Vorrichtung nach einem der drei vorstehenden Ansprüche, **dadurch gekennzeichnet, dass** die Recheneinrichtung dazu eingerichtet ist, eine Aktion abhängig vom Vergleich der Messwerte mit dem vorgespeicherten Datensatz und/oder der Erstellung eines Bestfit-Modells durchzuführen, wobei zumindest eine der nachfolgenden Aktionen durchgeführt wird:
- die Ausgabe eines Warnsignals,
- das Versenden von Kommunikationsdaten, oder
- eine Selbstkalibrierung.

9. Messkörper einer Spritzgussmaschine für eine axiale Kraftmessung mit einem Sensorsystem gemäß einem der vorstehenden Ansprüche, **dadurch gekennzeichnet, dass** der Messkörper (21) rotationssymmetrisch aufgebaut ist und einen Verformungsbereich (24) besitzt, der ringförmig zwischen einem Krafteinleitungsteil (22) und einem Kraftausleitungsteil (23) ausgebildet ist, wobei in dem Krafteinleitungsteil (22) und in dem Kraftausleitungsteil Aussparungen (28) vorgesehen sind, die derart zueinander auf einer geraden Verbindungslinie angeordnet sind, dass ein jeweiliges Verformungselementepaar (30a, 30b) symmetrisch zueinander und bündig auf der Oberfläche des Verformungsbereichs (24) lösbar montierbar ist.

10. Messkörper nach vorstehendem Anspruch, **dadurch gekennzeichnet, dass** der Messkörper (21) an einer Schneckenwelle der Spritzgussmaschine angeordnet und zum Messen des Einspritzdrucks geeignet ist.

11. Spritzgussmaschine mit einem Messkörper (21) gemäß einem der beiden vorstehenden Ansprüche oder einem Sensorsystem gemäß einem der Ansprüche 1 bis 3.

12. Kraftmesszelle für eine axiale Kraftmessung mit wenigstens einem Sensorsystem und einem Messkörper gemäß vorstehender Ansprüche,
**dadurch gekennzeichnet, dass**
die Verformungselemente des Verformungselementepaares des Sensorsystems symmetrisch zueinander und bündig auf der Oberfläche des Verformungsbereichs (24) des Messkörpers (21) angebracht ist.

13. Verfahren zur Fertigung eines Sensorsystems zum Bereitstellen einer axialen Kraftmessung mittels Dehnungsmessstreifen, wobei das Verfahren wenigstens folgende Schritte umfasst:
- Fertigen von wenigstens zwei mechanischen Verformungselementen, mit jeweils wenigstens zwei Halterungsabschnitten und einen Biegebalken;
- Anbringen von wenigstens einem Dehnungsmessstreifen auf jedem der Verformungselemente;
- Zusammenfassen von jeweils zwei Verformungselementen zu einem Verformungselementepaar
- Bereitstellen einer elektrischen Verbindung zwischen den jeweiligen Dehnungsmessstreifen des Verformungselementepaares und einer elektronischen Schaltung
- Abgleichen des Verformungselementepaares und der Dehnungsmessstreifen mittels der elektronischen Schaltung.

14. Verfahren zur Fertigung einer Kraftmesszelle gemäß dem vorstehenden Anspruch, umfassend einen im Wesentlichen rotationssymmetrischen Messzellenkörper (21) und ein Sensorsystem,
**dadurch gekennzeichnet, dass**
in einem Krafteinleitungsteil (22) und in einem Kraftausleitungsteil (23) zu einem angrenzenden Verformungsbereich (24) Aufnahmen (28) eingebracht werden, in die anschließend ein elektronisch abgeglichenes Sensorsystem passgenau eingesetzt und kraftschlüssig fixiert wird.
